Europäisches Patentamt

European Patent Office

Office européen des brevets

(11) Numéro de publication : **0 459 839 A1**

# (12) DEMANDE DE BREVET EUROPEEN

(21) Numéro de dépôt : **91400860.2**

(22) Date de dépôt : **29.03.91**

(51) Int. Cl.⁵ : **B60N 2/36**

(30) Priorité : **29.05.90 FR 9006623**

(43) Date de publication de la demande :
**04.12.91 Bulletin 91/49**

(84) Etats contractants désignés :
**DE ES GB IT**

(71) Demandeur : **REGIE NATIONALE DES USINES RENAULT S.A.**
**34, Quai du Point du Jour**
**F-92109 Boulogne Billancourt Cédex (FR)**

(72) Inventeur : **Thebault, Alain**
**54/56, rue Eugène Labiche**
**F-92500 Rueil Malmaison (FR)**
Inventeur : **Ginfray, Sylvain**
**69/52, rue Jules Michelet**
**F-92700 Colombes (FR)**

(74) Mandataire : **Ernst-Schonberg, Michel et al**
**REGIE NATIONALE DES USINES RENAULT**
**SA, Sce 0267, 860, quai de Stalingrad**
**F-92109 Boulogne Billancourt Cédex (FR)**

(54) **Revêtement de dossier rabattable de siège escamotable.**

(57)   Revêtement de dossier rabattable de siège escamotable qui comporte une assise (11) qui peut être basculée vers l'avant et un dossier (12) qui peut pivoter d'une position sensiblement verticale à une position horizontale, caractérisé par le fait que la partie inférieure du coussin d'appui du dossier porte un rembourrage (15) attaché à la base du coussin et qui est constitué par une matelassure (16) couverte d'une housse (17) raccordée transversalement au revêtement du dossier et que des moyens de commande (20) asservissent le basculement de l'assise et le mouvement du rembourrage (15) au cours du changement de position du dossier.

FIG.1

L'invention concerne un revêtement de dossier rabattable de siège escamotable qui comporte une assise qui peut être basculée vers l'avant et un dossier qui peut pivoter d'une position sensiblement verticale à une position horizontale.

La publication FR-A 1 182 761 décrit un siège escamotable du type précité. Lorsque le siège est associé à un mécanisme de ceinture de sécurité, l'ancrage inférieur médian de la ceinture de sécurité porte généralement un boîtier de verrouillage accroché à faible distance du plancher, le reste du mécanisme comprenant une sangle de longueur réglable, pouvant être de tout type connu à enrouleur ou non.

Le montage pivotant du dossier est effectué au moyen d'un axe supporté par des paliers rapportés sur le plancher.

Dans les sièges de ce type, la partie inférieure du revêtement du dossier et la partie postérieure du coussin de l'assise sont séparés par une fente de passage des boîtiers de verrouillage des ceintures de sécurité. La largeur de cette fente favorise le déplacement d'objets posés sur le coussin, puis leur chute sur le plancher.

L'objet de l'invention est de résoudre ce problème. A cet effet, la partie inférieure du coussin d'appui du dossier muni d'un revêtement porte un rembourrage attaché à la base du coussin, qui est constitué par une matelassure couverte d'une housse raccordée transversalement au revêtement du dossier, et des moyens de commande asservissent le basculement de l'assise et le mouvement du rembourrage au cours du changement de position du dossier.

Suivant un mode de réalisation de l'invention, le rembourrage est attelé à l'assise par un lien dont la tension permet de soulever le rembourrage au cours du déplacement de l'assise et favorise le rabattement du rembourrage contre la surface d'appui du dossier au cours du changement de position de ce dernier.

Réciproquement, au cours d'un changement de position de l'assise entre la position basculée et la position d'utilisation, le relâchement de la tension du lien favorise la remise en place du rembourrage lorsque le dossier occupe une position sensiblement verticale.

D'autres caractéristiques et avantages de l'invention apparaîtront à la lecture d'un mode de réalisation de celle-ci, faite en référence au dessin annexé dans lequel :

    – La figure 1 est une représentation schématique d'un siège arrière de véhicule automobile en position d'utilisation,

    – La figure 2 est une représentation schématique du siège partiellement escamoté,

    – La figure 3 est une représentation schématique du siège en position escamotée.

Le dessin représente un siège arrière 10 de véhicule automobile matérialisé par un coussin d'assise 11 et par un dossier 12 qui portent respectivement des axes transversaux A et B perpendiculaires au plan de symétrie vertical du siège. L'axe tranversal A est prévu entre la partie avant inférieure du coussin d'assise 11 et la structure du véhicule représentée par son plancher 13.

L'axe transversal B est prévu entre la partie inférieure du dossier 12 et la structure du véhicule représentée par sa paroi latérale 9.

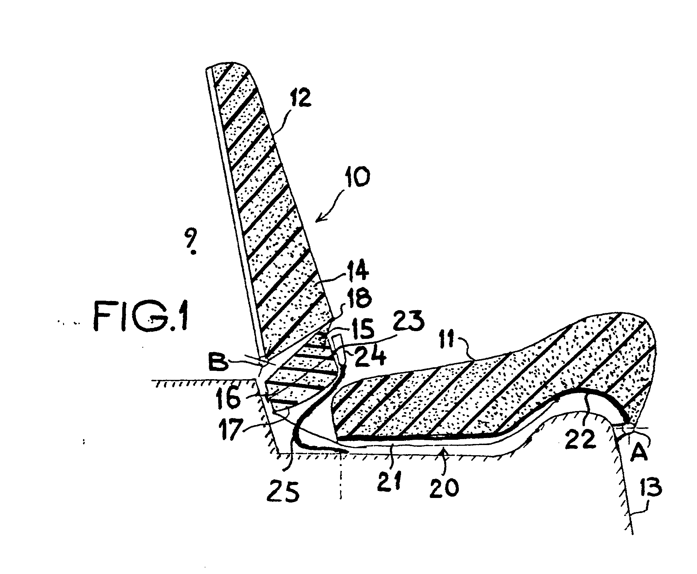

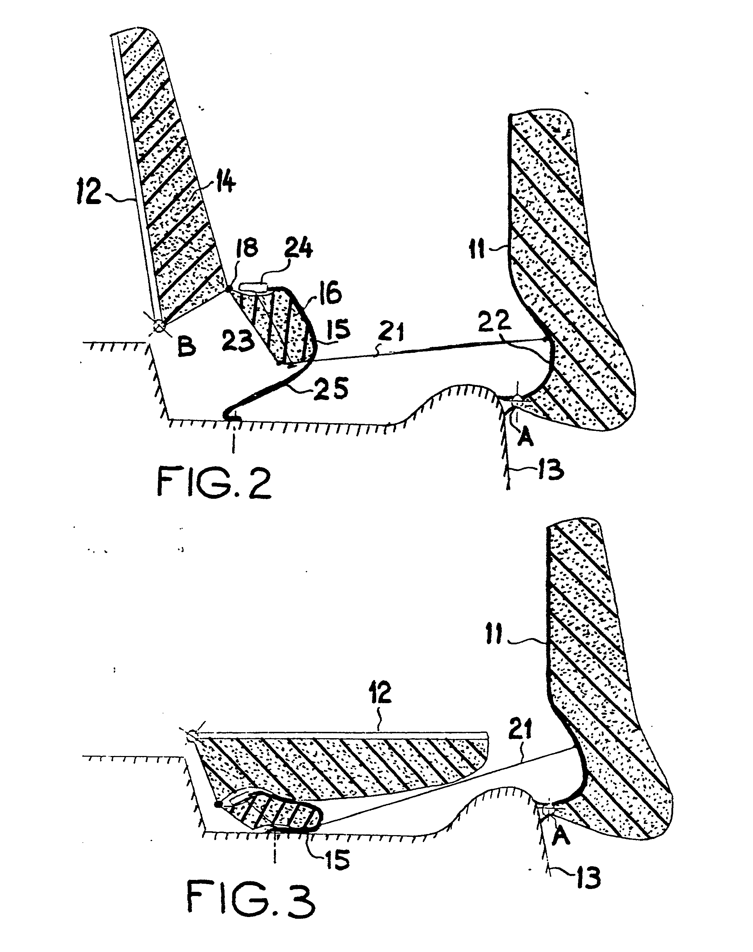

Les figures 2 et 3 montrent respectivement que l'assise 11 peut être basculée vers l'avant autour de l'axe A et que le dossier 12 peut pivoter par exemple autour de l'axe B d'une position sensiblement verticale représentée à la figure 1 vers une position horizontale représentée à la figure 3. Le dossier est recouvert par un coussin d'appui 14.

La partie inférieure du coussin 14 porte un rembourrage 15 constitué par une matelassure 16 couverte d'une housse 17 raccordée transversalement par une couture 10 au coussin 14.

Une liaison de commande 20 asservit le basculement de l'assise 11 et le mouvement du rembourrage 15 au cours du changement de position du dossier 12.

A cet effet, la liaison 20 constituée par des sangles 21 est attelée à la partie antérieure d'un support 22 du coussin de l'assise 11.

Selon une autre caractéristique de l'invention, le rembourrage 15 porte un bouton de retenue 23 agrafé sur lequel peut être accroché un boîtier 24 de verrouillage de la ceinture de sécurité solidarisé avec le plancher 13 par une sangle 25.

Il apparaît, de la sorte, que du basculement de l'assise 11 vers l'avant, résulte un relèvement du rembourrage 15 qui pivote autour de la ligne de couture 10. Le dossier 12 peut alors être pivoté dans sa position horizontale représentée à la figure 3.

Par contre, lorsque le dossier 12 est replacé dans sa position d'utilisation sensiblement verticale, lors du basculement de l'assise 11 vers l'arrière, celle-ci prend appui sur le rembourrage 15 et le remplace dans sa position initiale représentée à la figure 1. Les mouvements précités du rembourrage sont sans influence sur la position relative des boîtiers 24 par rapport au rembourrage.

## Revendications

1°) Revêtement de dossier rabattable de siège escamotable qui comporte une assise (11) qui peut être basculée vers l'avant et un dossier (12) qui peut pivoter d'une position sensiblement verticale à une position horizontale, caractérisé par le fait que la partie inférieure du coussin d'appui du dossier porte un rembourrage (15) attaché à la base du coussin et qui est constitué par une matelassure (16) couverte d'une housse (17) raccordée transversalement au revêtement du dossier et que des moyens de commande (20) asservissent le basculement de l'assise et le mouvement du rembourrage (15) au cours du changement de position du dossier.

2°) Revêtement selon la revendication 1, caractérisé par le fait que le rembourrage (15) est attelé à la partie antérieure d'un support (22) d'assise (11).

3°) Revêtement selon la revendication 1 ou 2, caractérisé par le fait que le rembourrage (15) possède des moyens de retenue (23) des boîtiers (24) de verrouillage des ceintures de sécurité.

FIG.1

FIG.2

FIG.3

Office européen
des brevets

# RAPPORT DE RECHERCHE EUROPEENNE

Numero de la demande

EP    91 40 0860

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | FR-A-1503650 (SOCIETE DES AUTOMOBILES SIMCA)<br>* figure 1 *<br><br>---- | 1 | B60N2/36 |
| A | US-A-4191417 (FERRARA)<br>* figures 1, 2 *<br><br>---- | 1 | |
| D,A | FR-A-1182761 (FORD)<br>* figure 5 *<br><br>----- | 1 | |

**DOMAINES TECHNIQUES RECHERCHES (Int. Cl.5 )**

B60N

Le présent rapport a été établi pour toutes les revendications

| Lieu de la recherche | Date d'achèvement de la recherche | Examinateur |
|---|---|---|
| BERLIN | 16 MAI 1991 | BECKER W.D.H. |